# EUROPEAN PATENT APPLICATION

(11) **EP 2 362 712 A2**
(43) Date of publication of application: **31.08.2011**
(21) Application number: 11153894.8
(22) Date of filing: 09.02.2011
(51) Int. Cl.: H05B 33/08

(54) **Led Lighting Circuit**

(30) Priority: 22.02.2010 JP 2010036033
(71) Applicant: Panasonic Electric Works Co., Ltd., Kadoma-shi Osaka 571-8686 (JP)
(72) Inventor: Kumada, Kazuhiro, Hyogo (JP); Kuroki, Yosifumi, Osaka (JP); Mizukawa, Hiromitsu, Osaka (JP)
(74) Representative: Rüger, Barthelt & Abel Patentanwälte

(57) **Abstract**

[Object] To provide a LED lighting circuit for preventing an increase in an output voltage of a DC/DC converter in an unloaded state even at the time of lighting light-emitting diodes.

[Means for Settlement] The LED lighting circuit includes a power factor correction circuit PFC for outputting a DC voltage V2, a DC/DC converter 1 for stepping down the DC voltage V2 and generating a DC voltage V3, an LED light source part 2 to be lit by flowing an LED current by the DC voltage V3, a control part 3 for controlling a switching element Q1 so that the LED current is constant, and a power supply part 4 for generating a

DC voltage V5 for driving the control part 3, wherein the power supply part 4 and the LED light source part 2 are connected in series, the LED light source part 2 is connected to a high voltage line of the power factor correction circuit PFC, the power supply part 4 is connected to a low voltage line of the power factor correction circuit PFC, and at least at the time of lighting, the power supply part 4 is supplied with a power source from the power factor correction circuit PFC via the LED light source part 2 to generate the DC voltage V5.

## Description

### [Field of the Invention]

The present invention relates to a LED lighting circuit.

### [Background Art]

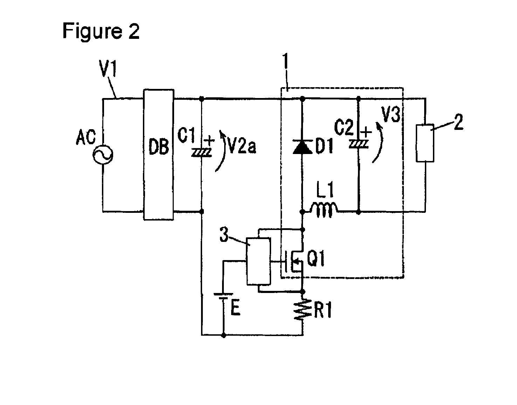

Conventionally, a LED lighting circuit for lighting a LED light source formed by light-emitting diodes is provided. A LED lighting circuit of Conventional Example 1 is formed by an AC power source AC, a diode bridge DB, a DC/DC converter 1, an LED light source part 2, and a control part 3. A circuit diagram of Conventional Example 1 is shown in Fig. 2.

The AC power source AC is a commercial power source. In this conventional example, the AC power source AC outputs an AC voltage V1 of 100 V to the diode bridge DB. The diode bridge DB is formed by a full-wave rectifying circuit, and a capacitor C1 formed by an electrolytic capacitor is connected between output ends. The diode bridge DB smoothes the AC voltage V1 so as to generate a DC voltage V2a of substantially 140 V in both ends of the capacitor C1.

The DC/DC converter 1 forms a step-down chopper circuit with a diode D1, a capacitor C2, an inductor L1, and a switching element Q1. The capacitor C2 is formed by an electrolytic capacitor, and the switching element Q1 is formed by an n-type channel MOSFET.

A series circuit of the capacitor C2, the inductor L1, the switching element Q1, and a resistance R1 is connected in parallel to the capacitor C1. With regard to the capacitor C2, a positive electrode is connected to a positive electrode of the capacitor C1, and a negative electrode is connected to the inductor L1. With regard to the switching element Q1, a drain terminal is connected to the inductor L1, a gate terminal is connected to the control part 3, and a source terminal is connected to a negative electrode of the capacitor C1 via a resistance R1. The diode D1 is connected in parallel to the capacitor C2 and the inductor L1. With regard to the diode D1, an anode is connected to a connection point between the inductor L1 and the switching element Q1, and a cathode is connected to the positive electrode of the capacitor C2.

The DC/DC converter 1 forms the step-down chopper circuit with the above configuration. In the DC/DC converter 1, the switching element Q1 is turned ON/OFF by the control part 3, so that the AC voltage V2a is converted to generate a DC voltage V3 in both ends of the capacitor C2.

The LED light source part 2 is configured by a plurality of light-emitting diodes, and connected in parallel to the capacitor C2. An LED current flows by the DC voltage V3 generated in the both ends of the capacitor C2 to light the LED light source part 2.

The control part 3 has a DC power source E as an input power source, and controls turning ON/OFF of the switching element Q1 of the DC/DC converter 1 so that a predetermined LED current flows through the LED light source part 2. The control part 3 detects a current flowing through the switching element Q1 by detecting a voltage in both ends of the resistance R1. The control part 3 also detects a current flowing through the inductor L1. When the current flowing through the switching element Q1 becomes more than a predetermined value, the control part 3 turns OFF the switching element Q1. When the current flowing through the inductor L1 becomes less than a predetermined value, the control part 3 turns ON the switching element Q1 . Thereby, the control part 3 controls the current flowing through the LED light source part 2 to be substantially constant.

An unloaded state that the LED light source part 2 is not connected in the LED lighting circuit of Conventional Example 1 will be described. When the LED light source part 2 is not connected, the current does not flow through the switching element Q1. Thus, the control part 3 keeps turning ON the switching element Q1 . Thereby, the negative electrode of the capacitor C1 and the negative electrode of the capacitor C2 are at the substantially same potential, and DC voltage V2 is applied in the both ends of the capacitor C2. Therefore, in the LED lighting circuit of Conventional Example 1, there is a need for selecting a high voltage electrolytic capacitor as a capacitor C3 as well, and thus there is a problem that cost is increased.

Thus, an LED lighting circuit in which a control part is not started up in an unloaded state that light-emitting diodes are removed is provided (for example, Patent Literature 1).

### [Conventional Technique Literature]

### [Patent Literature]

[Patent Literature 1] JP 2008-278641 A

### [Disclosure of the Invention]

### [Problems to be solved by the Invention]

However, with the LED lighting circuit of Patent Literature 1, in a case where the light-emitting diodes are removed at the time of lighting, the control part keeps driving. Therefore, in a case where the control part detects current flowing through the light-emitting diodes and performs constant current control, there is a problem that an output voltage is increased upon the removal of the light-emitting diodes at the time of lighting the light-emitting diodes. Therefore, there is a need for selecting a high voltage electrolytic capacitor as a capacitor to be provided in an output end of a DC/DC converter, and thus there is a problem that cost is increased.

The present invention is achieved in consideration with the above situation, and an object thereof is to provide an LED lighting circuit for preventing an increase in output voltage of a DC/DC converter in an unloaded state even at the time of lighting light-emitting diodes.

### [Means adapted to solve the Problems]

In order to solve the above problem, a LED lighting circuit according to a first aspect of the present invention includes a DC power source for outputting a first DC voltage, a DC/DC converter having a switching element and a capacitor for converting the first DC voltage upon turning ON/OFF of the switching element so as to generate a second DC voltage in both ends of the capacitor, an LED light source part configured by one or more light-emitting diodes, the LED light source part to be lit by flowing a LED current by the second DC voltage, a control part for controlling turning ON/OFF of the switching element so that the LED current supplied from the DC/DC converter to the LED light source part is constant, and a power supply part for supplying a drive power source for driving the control part, wherein the power supply part and the LED light source part are connected in series, the LED light source part is connected to a high voltage line side of the DC power source, the power supply part is connected to a low voltage line side of the DC power source, and at least at the time of lighting, the power supply part is supplied with a power source from the DC power source via the LED light source part so as to generate the drive power source.

With an LED lighting circuit according to a second aspect of the present invention, in the first aspect of the present invention, the control part is configured by an integrated circuit.

With an LED lighting circuit according to a third aspect of the present invention, in the first or second aspect of the present invention, the DC power source is configured by a step-up chopper circuit.

### [Effect of the Invention]

As described above, an effect of preventing the increase in an output voltage of a DC/DC converter in an unloaded state even at the time of lighting a light-emitting diode can be obtained in the present invention.

### [Brief Description of the Drawings]

[Fig.1] Fig. 1 is a diagram shaving a schematic circuit configuration of an LED lighting circuit according to an embodiment of the present invention.
[Fig.2] Fig. 2 is a diagram shaving a schematic circuit configuration of an LED lighting circuit of Conventional Example 1.

### [Best Mode for Carrying Out the Invention]

Hereinafter, an embodiment of the present invention will be described based on the drawings.

### (Embodiment)

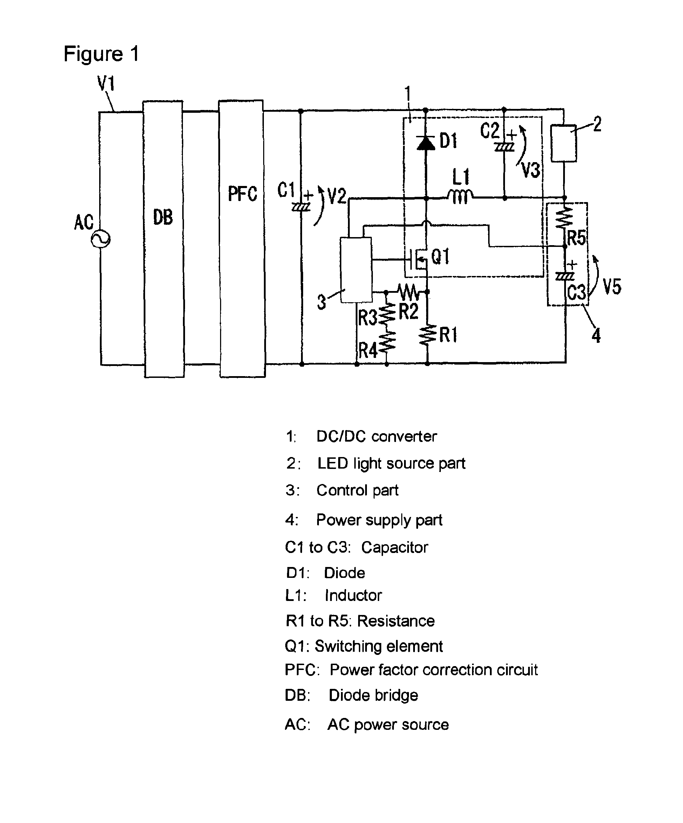

A schematic circuit configuration diagram of the embodiment of the present invention is shown in Fig. 1. The present embodiment includes an AC power source AC, a diode bridge DB, a DC/DC converter 1, an LED light source part 2, a control part 3, a power factor correction circuit PFC, and a power supply part 4. It should be noted that the same configuration as Conventional Example 1 will be given the same reference numerals and description thereof will be omitted.

In an LED lighting circuit of the present embodiment, a power factor correction circuit PFC (a DC power source) is connected in a subsequent stage of the diode bridge DB. The power factor correction circuit PFC is configured by a step-up chopper circuit, for stepping up a rectified voltage from the diode bridge DB to a desired DC voltage, so that the DC voltage is smoothed in a capacitor C1 and a DC voltage V2 (first DC voltage) is generated in both ends of the capacitor C1. The power factor correction circuit PFC corrects a power factor of an input current by bringing an input current close to a sinusoidal wave.

As well as Conventional Example 1, the DC/DC converter 1 steps down the DC voltage V2 and generates a DC voltage V3 (second DC voltage) in both ends of a capacitor C2.

The control part 3 controls turning ON/OFF of a switching element Q1 of the DC/DC converter 1 so that a predetermined LED current flows through the LED light source part 2. The control part 3 detects a current flowing through the switching element Q1. A series circuit of resistances R2 to R4 is connected in parallel to a resistance R1 connected between a source terminal of the switching element Q1 and a negative electrode of the capacitor C1. The control part 3 detects the current flowing through the switching element Q1 by detecting a voltage V4 generated in a connection point between the resistances R2 and R3. When the switching element Q1 is turned ON, the current flows through the switching element Q1, and the voltage V4 becomes more than a predetermined value V4a, the control part 3 turns OFF the switching element Q1. It should be noted that the resistance R3 is formed by a variable resistance capable of varying the predetermined value V4a by changing a resistance value of the resistance R3.

The control part 3 is connected to a connection point between an inductor L1 and a diode D1, and detects an inductor current flowing through the inductor L1. When the switching element Q1 is turned OFF in a state that the switching element Q1 is turned ON and the current flows through the inductor L1, a counter electromotive voltage is generated in the inductor L1. A current flowing from the inductor L1 to the LED light source part 2 via the diode D1 is generated by the generated counter electromotive voltage. The control part 3 detects the inductor current flowing through the inductor L1, and turns ON the switching element Q1 when the inductor current becomes less than a predetermined value. With the above configuration, the control part 3 controls the LED current flowing through the LED light source part 2 to be substantially constant by repeatedly turning ON/OFF the switching Q1 .

The power supply part 4 forms a series circuit with the LED light source part 2, and is connected in parallel to the capacitor C1. An anode side of the LED light source part 2 is connected to a high voltage line connected to a positive electrode of the capacitor C1, and one end of the power supply part 4 is connected to a low voltage line connected to a negative electrode of the capacitor C1. The power supply part 4 is configured by connecting a resistance R5 and a capacitor C3 formed by an electrolytic capacitor in series. One end of the resistance R5 is connected to a cathode side of the LED light source part 2, the other end of the resistance R5 is connected to a positive electrode of the capacitor C3, and a negative electrode of the capacitor C3 is connected to a negative electrode of the capacitor C1. The capacitor C3 is electrically charged by the DC voltage V2 outputted by the power factor correction circuit PFC via the LED light source part 2 and the resistance R5, so that a DC voltage V5 is generated in both ends of the capacitor C3.

The control part 3 is connected in parallel to the capacitor C3, and the DC voltage V5 generated in the both ends of the capacitor C3 serves as a drive power source of the control part 3.

With the above configuration, in a case where the LED light source part 2 connected to a high voltage side of the power supply part 4 in series is removed or an unloaded state is generated due to breakdown of the LED light source part 2 at the time of starting up the LED lighting circuit, a charging path is interrupted, so that the capacitor C3 is not electrically charged. Therefore, since the DC voltage V5 is not generated in the both ends of the capacitor C3, the control part 3 is not driven. In the case where the LED light source part 2 is removed or is the unloaded state is generated due to the breakdown of the LED light source part 2 at the time of lighting the LED light source part 2, the capacitor C3 is not electrically charged as well, so that the control part 3 is stopped. When the control part 3 is stopped, a drive signal is not outputted to the switching element Q1, so that the switching element Q1 is maintained in an OFF state.

Therefore, irrespective of the time of starting up and lighting the LED light source part 2, when the LED light source part 2 is in the unloaded state, the switching element Q1 is maintained in the OFF state. Thus, an increase in output voltage of the DC/DC converter 2 by constant current control of the control part 3 can be prevented. Therefore, there is no need for selecting a high with stand voltage electrolytic capacitor as the capacitor C2, and thus cost can be reduced.

Although the DC/DC converter 1 of the present embodiment forms a step-down chopper circuit, the DC/DC converter may be formed by a half bridge circuit or a step-up/down chopper circuit.

The control part 3 may be configured by an integral circuit in which the switching element Q1 and the resistances R1 to R4 are incorporated (so-called IPD (Intelligent Power Device)). Thereby, the configuration of the LED lighting circuit can be simplified.

### [Description of Reference Numerals]

1: DC/DC converter
2: LED light source part
3: Control part
4: Power supply part
C1 to C3: Capacitor
D1: Diode
L1: Inductor
R1 to R5: Resistance
Q1: Switching element
PFC: Power factor correction circuit
DB: Diode bridge
AC: AC power source

## Claims

1. A LED lighting circuit comprising:
a DC power source for outputting a first DC voltage;
a DC/DC converter having a switching element and a capacitor for converting the first DC voltage upon turning ON/OFF of the switching element so as to generate a second DC voltage in both ends of the capacitor;
an LED light source part configured by one or more light-emitting diodes, the LED light source part to be lit by flowing a LED current by the second DC voltage;
a control part for controlling the turning ON/OFF of the switching element so that the LED current supplied from the DC/DC converter to the LED light source part is constant; and
a power supply part for supplying a drive power source for driving the control part, wherein:
the power supply part and the LED light source part are connected in series;
the LED light source part is connected to a high voltage line side of the DC power source;
the power supply part is connected to the side of a low voltage line side of the DC power source; and
at least at the time of lighting, the power supply part is supplied with a power source from the DC power source via the LED light source part to generate the drive power source.

2. The LED lighting circuit according to claim 1, wherein
the control part is configured by an integrated circuit.

3. The LED lighting circuit according to claim 1 or 2, wherein the DC power source is configured by a step-up chopper circuit.
